# FASCICULE DE BREVET EUROPEEN

(11) **EP 3 723 481 B1**
(45) Date de publication et mention de la délivrance du brevet: **02.02.2022**
(21) Numéro de dépôt: 18826254.7
(22) Date de dépôt: 14.12.2018
(51) Int. Cl.: A01N 1/02

(54) **DISPOSITIF MEDICAL POUR LA CONSERVATION D'UN TISSU CORNEEN INCLUANT UN COUVERCLE D'APPLANATION, ET EVENTUELLEMENT UN COUVERCLE DE TREPANATION**
MEDIZINISCHE VORRICHTUNG ZUR KONSERVIERUNG VON HORNHAUTGEWEBE, MIT EINER APPLANATIONSABDECKUNG UND OPTIONAL EINER TREPANATIONSABDECKUNG
MEDICAL DEVICE FOR PRESERVATION OF CORNEAL TISSUE, COMPRISING AN APPLANATION COVER, AND OPTIONALLY A TREPANATION COVER

(30) Priorité: 15.12.2017 FR 1762208
(43) Date de publication de la demande: 21.10.2020
(73) Titulaire: Université Jean-Monnet, 42100 Saint Etienne (FR); Centre Hospitalier Universitaire, 42100 Saint Etienne (FR)
(72) Inventeur: GAIN, Philippe, 69009 Lyon (FR); THURET, Gilles, 42330 Saint Bonnet les Oules (FR); HERBEPIN, Pascal, 69200 Venissieux (FR)
(74) Mandataire: Be IP
(86) Numéro de dépôt international: PCT/EP2018/084916
(87) Numéro de publication internationale: WO 2019/115753

(56) Documents cités:
- WO-A1-2006/052478
- WO-A1-2010/116338
- WO-A1-2014/140434
- CN-U- 204 860 784
- US-A1- 2008 294 149
- US-A1- 2011 014 690

## Description

### DOMAINE DE L'INVENTION

La présente invention concerne le domaine technique général des dispositifs médicaux pour la conservation et/ou le contrôle qualité (imagerie, analyse microbiologique, etc.) et/ou le traitement d'un tissu cornéen humain ou animal préalablement prélevé sur un donneur. Ce tissu cornéen est composé de la cornée et d'une collerette de sclère périphérique entourant la cornée.

Un tel tissu cornéen conservé peut être utilisé pour réaliser une greffe de cornée, ou pour réaliser des expérimentations ex vivo.

Plus précisément, la présente invention concerne le domaine technique des dispositifs de conservation d'un tissu cornéen comprenant :
- des moyens de réception et de blocage du tissu cornéen,
- des moyens de circulation d'un (ou plusieurs) fluide(s) (liquide ou gazeux) de conservation du tissu cornéen.

### ARRIERE PLAN DE L'INVENTION

On a déjà proposé différents dispositifs de conservation d'un tissu cornéen.

Le document US 5 789 240 décrit un dispositif de conservation d'un tissu cornéen simulant la chambre antérieure de l'œil. Ce dispositif ne permet pas une circulation stérile d'un fluide de conservation sur les deux faces du tissu cornéen, c'est-à-dire, à la fois sur les faces épithéliale et endothéliale du tissu cornéen. Par ailleurs, les parois du dispositif n'étant pas transparentes, il est impossible de réaliser une-imagerie du tissu cornéen ou encore une intervention de découpe par un LASER sans ouvrir le dispositif. Ainsi la durée de survie du tissu cornéen est courte et incompatible avec une utilisation pour une greffe de cornée.

Le document WO 2014/140434 décrit un dispositif de conservation de tissu cornéen permettant de remédier à ces inconvénients.

Le dispositif selon WO 2014/140434 comprend :
- des moyens de réception d'un prélèvement cornéen incluant une première partie - dénommée *« pièce intermédiaire »* - comportant un trou du diamètre de la cornée entouré d'une gorge circulaire et d'un rebord formant un logement destiné à recevoir le prélèvement cornéen, le logement assurant le bon centrage du prélèvement cornéen lors de sa mise dans le dispositif et permettant au prélèvement cornéen de rester stable lors de l'ouverture du dispositif au bloc opératoire ;
- des moyens d'emprisonnement comportant une seconde partie - dénommée *« couvercle endothélial »* - comportant un trou du diamètre de la cornée entouré d'un rebord destiné à venir emprisonner le prélèvement cornéen en écrasant une collerette de sclère du prélèvement cornéen sur la gorge circulaire de la pièce intermédiaire,
les moyens de réception et d'emprisonnement du prélèvement cornéen bloquant de manière étanche la collerette de sclère qui entoure la cornée pour délimiter une chambre endothéliale et une chambre épithéliale séparées dans lesquelles peut circuler un milieu de conservation avec une surpression dans la chambre endothéliale.

Le dispositif de conservation décrit dans WO 2014/140434 présente de nombreux avantages et permet une conservation longue durée du tissu cornéen.
La présente invention vise à apporter des améliorations au dispositif décrit dans WO 2014/140434.

Notamment, un but de la présente invention est de proposer un dispositif de conservation dans lequel :
- la durée de conservation du tissu cornéen est augmentée,
- la qualité du tissu cornéen et son imagerie sont améliorées,
- la manipulation du tissu cornéen contenu dans le dispositif est facilitée (notamment en ce qui concerne la découpe lamellaire ou verticale du tissu cornéen en vase clos au laser à la banque de cornée ou au bloc opératoire (grâce à un couvercle d'applanation qui sera décrit dans la suite), sa trépanation verticale mécanique au bloc opératoire (grâce à un couvercle de trépanation qui sera également décrit dans la suite) etc.

### BREVE DESCRIPTION DE L'INVENTION

A cet effet, l'invention propose un dispositif médical pour la conservation d'un tissu cornéen préalablement prélevé, le dispositif comprenant un fond au moins partiellement transparent, au moins une paroi latérale, des moyens de réception et de blocage du tissu cornéen, et un couvercle d'applanation pour coiffer une ouverture opposée au fond, le couvercle d'applanation incluant fenêtre transparente remarquable en ce que le couvercle d'applanation inclut en outre un support entre la fenêtre et la paroi latérale, le support comportant des moyens de déplacement en translation de la fenêtre par rapport à la paroi latérale du dispositif.

Des aspects préférés mais non limitatifs du dispositif médical selon l'invention sont les suivants :
- le support peut être constitué dans un matériau souple élastiquement déformable ;
- le dispositif est configuré de telle sorte que, en usage, les moyens de réception et de blocage définissent avec le fond, le tissu cornéen, la paroi latérale et le couvercle, un chambre endothéliale et une chambre épithéliale, les chambres endothéliale et épithéliale incluant des orifices d'entrée et de sortie pour la circulation d'un gaz et/ou d'un fluide de conservation, le support pouvant comprendre une zone de dégagement pour recevoir une partie du gaz et/ou du fluide de conservation contenu dans la chambre épithéliale lorsque la fenêtre est déplacée en translation vers le fond ;
- les moyens de déplacement en translation peuvent comprendre un soufflet annulaire ayant au moins un pli ;
- le soufflet annulaire peut être constitué dans un matériau à retour de forme ;
- la paroi latérale comprend une nervure annulaire; cette nervure annulaire est destinée à coopérer avec des moyens de fixation du couvercle (tels que des crochets de fixation) pour permet la fixation amovible du couvercle sur la paroi latérale,
- le dispositif peut comprendre en outre un couvercle de trépanation incluant une enveloppe extérieure circulaire, un porte-lame, et une lame cylindrique, le couvercle d'applanation pouvant être remplacé par le couvercle de trépanation pour coiffer une ouverture opposée au fond (11) ; dans ce cas, le dispositif médical est un kit incluant à la fois le couvercle d'applanation et le couvercle trépanation, le couvercle de trépanation pouvant être monté sur la paroi latéral en lieu et place du couvercle d'applanation, par exemple pour réaliser une découpe du tissu cornéen au bloc opératoire,
- l'enveloppe extérieure du couvercle de trépanation peut comporter aux moins deux crochets de fixation à sa périphérie, les crochets de fixation s'étendant radialement et étant destiné à coopérer avec la nervure ménagée dans la face externe de la paroi latérale; ceci permet de faciliter l'installation du couvercle de trépanation,
- la paroi latérale peut comprendre un rebord périphérique, et le fond peut comprendre des moyens de clipsage, lesdits moyens de clipsage consistant en au moins deux pattes élastiques destinées à coopérer avec le rebord périphérique ;
- les moyens de clipsage peuvent comprendre au moins trois pattes élastiques régulièrement réparties autour de la paroi latérale.

### BREVE DESCRIPTION DES DESSINS

D'autres avantages et caractéristiques du dispositif selon l'invention ressortiront mieux de la description qui va suivre de plusieurs variantes d'exécution, données à titre d'exemples non limitatifs, à partir des dessins annexés sur lesquels :
- la figure 1 est une représentation schématique de chambres de conservation du tissu cornéen (chambre endothéliale et chambre épithéliale),
- les figures 2, 3 et 4 sont des représentations schématiques d'une cassette intégrant les chambres de conservation du tissu cornéen et l'ensemble des périphériques nécessaires (canaux, réservoir, compartiment récupération, vannes contrôlées par gaz de régulation, canaux et embout de raccord à un gaz propulseur),
- la figure 5 est une représentation schématique d'une station d'accueil adaptée pour recevoir une pluralité de cassettes telles qu'illustrées aux figures 2 à 4,
- les figures 6 et 7 sont des représentations fonctionnelles de deux variantes de réalisation de cassettes,
- la figure 8 est une représentation schématique d'un système de commutation de cassette,
- les figures 9 et 10 sont des représentations schématiques illustrant un couvercle d'applanation du dispositif médical,
- les figures 11 et 12 sont des représentations schématiques partielles du dispositif médical, ces figures illustrant le principe de fonctionnement du couvercle d'applanation illustré aux figures 9 et 10,
- les figures 13 et 14 sont des représentations schématiques illustrant un couvercle de trépanation du dispositif médical.

### DESCRIPTION DETAILLEE DE L'INVENTION

Différents exemples du dispositif médical vont maintenant être décrits en référence aux figures. Dans ces différentes figures, les éléments équivalents sont désignés par la même référence numérique.

### 1. Généralités sur le dispositif

### 1.1. Structure générale du dispositif

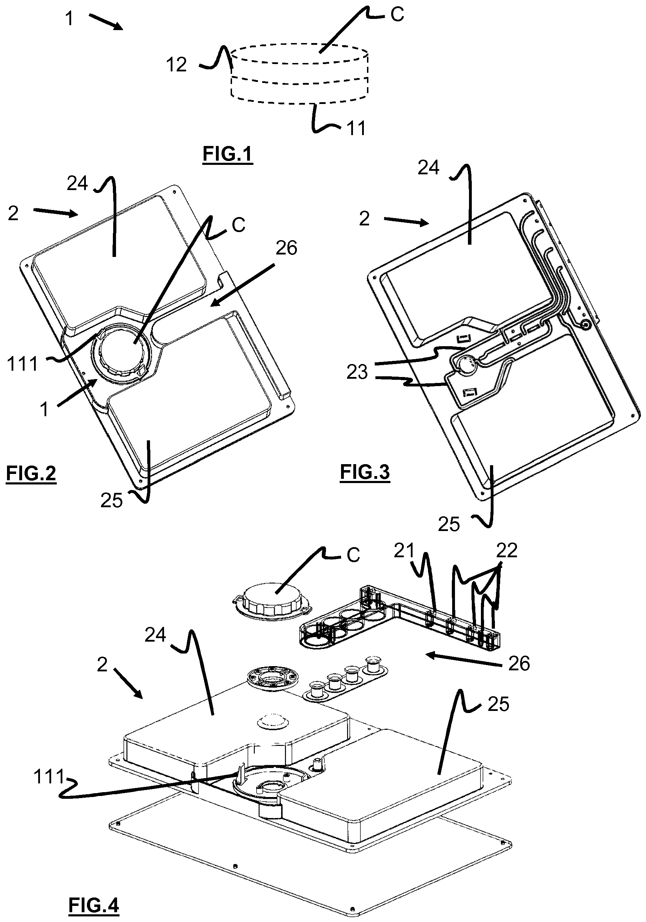

En référence à la figure 1, on a illustré des chambres de conservation 1 du dispositif, en particulier des chambres endothéliale et épithéliale, ces chambres de conservation 1 étant délimitées par :
- le tissu cornéen préalablement prélevé d'une part, et
- un fond 11, au moins une paroi latérale 12 et un couvercle C du dispositif d'autre part.

Le fond 11 est constitué dans un matériau transparent au rayonnement lumineux, soit en totalité soit dans une zone située en regard du couvercle C.

Le couvercle C peut consister en :
- un couvercle « standard » (incluant une paroi couvrante destinée à coiffer une ouverture supérieure de la paroi latérale 12 opposée au fond, et des moyens de fixation périphériques) ce couvercle standard comporte au moins une partie transparente en regard du tissu cornée, ou
- un couvercle d'applanation 13 par exemple pour la découpe du tissu cornéen au LASER ou son imagerie, ou
- un couvercle de trépanation 15 pour la trépanation mécanique du tissu cornéen, ou
- tout autre type de couvercle en fonction de l'application visée.
Selon l'invention, le couvercle C consiste en le couvercle d'applanation 13.

Dans le mode de réalisation illustré à la figure 1, les chambres de conservation 1 présentent une forme cylindrique. Toutefois, les chambres de conservation 1 peuvent présenter d'autres formes (parallélépipédique, ovoïde, etc.) en fonction de l'application visée.

Le fond 11, la paroi latérale 12 et le couvercle C peuvent être réalisés en deux pièces ou plus.

Par exemple dans un premier mode de réalisation, le fond 11 et la paroi latérale 12 sont monobloc. Dans ce cas le fond 11 est transparent pour permettre une inspection du prélèvement cornéen (visuelle ainsi que par tout moyen optique ou ultrasonore), le couvercle C consistant en une pièce indépendante destinée à fermer l'ouverture supérieure. Le couvercle C comprend également au moins une partie centrale transparente pour permettre une inspection du prélèvement cornéen visuelle ainsi que par tout moyen optique ou ultrasonore).

Dans un deuxième mode de réalisation, le couvercle C et la paroi latérale 12 sont monobloc.

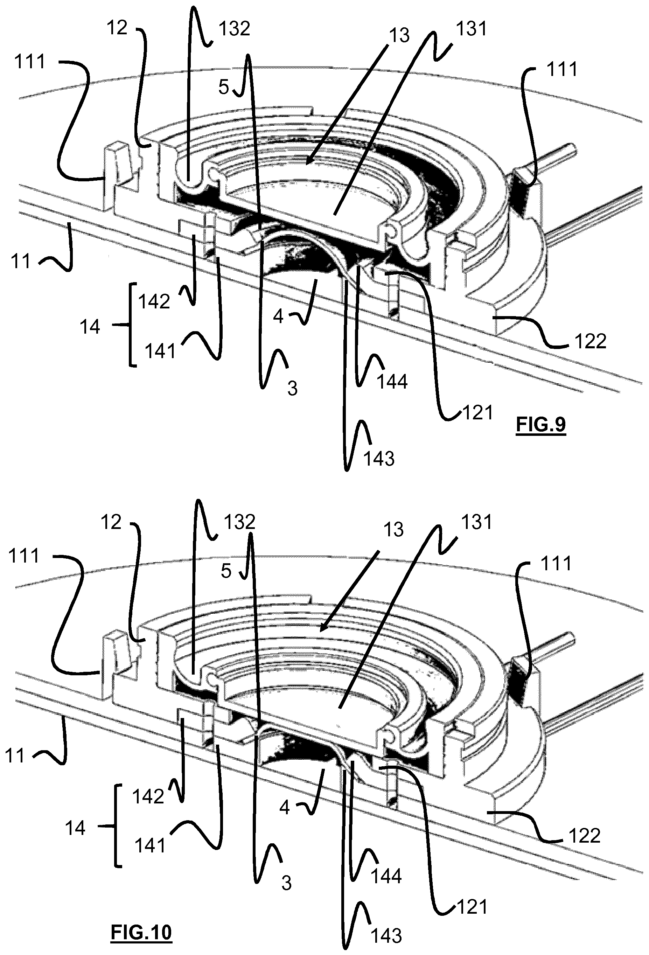

Enfin dans un troisième mode de réalisation, et comme représenté dans les variantes de réalisation illustrées aux figures 9-10 et 13-14, le fond 11, la paroi latérale 12 et le couvercle peuvent consister en trois pièces indépendantes destinées à être assemblées. Dans ces différentes variantes, le fond 11 comprend des moyens de clipsage 111 destinés à coopérer avec un rebord périphérique 122 s'étendant radialement vers l'extérieur de la paroi latérale 12.

Les moyens de clipsage 111 peuvent comprendre deux (ou plus de deux) pattes élastiques à retour élastique (par exemple à mémoire de forme) disposées en regard l'une de l'autre et s'étendant sensiblement perpendiculairement au fond 11. Lorsque le fond 11 comprend plus de deux pattes élastiques, celles-ci peuvent être régulièrement réparties en différentes positions du fond 11 de sorte à entourer la paroi latérale 12. Le fait que les pattes élastiques soient régulièrement réparties permet d'appliquer une force sensiblement homogène sur toute la périphérie de la paroi latérale 12.

Chaque patte élastique est pourvue d'un bec d'accrochage à son extrémité libre. Chaque bec d'accrochage fait saillie dans un plan horizontal (parallèle au fond 11). Bien entendu, les éléments de clipsage 111 pourraient être de tout autre type connu de l'homme du métier.

Avantageusement, chaque patte élastique peut comprendre une zone de faiblesse permettant de casser la patte élastique lors de l'application d'une force (supérieure à une valeur seuil) dans une direction opposée au bec d'accrochage. Ceci permet de faciliter le dégagement de la paroi latérale 12 afin de libérer le tissu cornéen lors d'une procédure chirurgicale de greffe de cornée par exemple.

Il est bien évident pour l'homme du métier que dans certains modes de réalisation, les pattes élastiques peuvent être dépourvues de zones de faiblesse. Ainsi dans ces modes de réalisation, les pattes élastiques peuvent être écartées (sans casser) pour permettre d'enlever et remettre le couvercle C au moment du prélèvement, par exemple lorsque le centrage de la cornée n'a pas été réalisé correctement.

### 1.2. Intégration du dispositif

Le dispositif médical peut consister en une cassette comportant les chambres de conservation 1 destinées à recevoir le tissu cornéen 3.

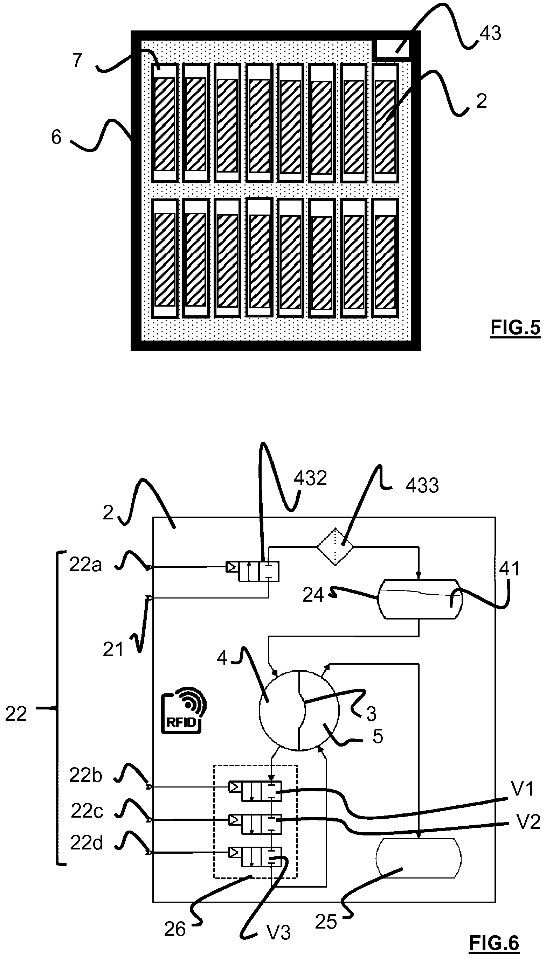

La cassette 2 peut présenter une forme parallélépipédique et inclure :
- une (ou plusieurs) borne(s) de connexion d'entrée 21 débouchant vers l'extérieur de la cassette 2, et destinée(s) à être raccordée(s) à des moyens de liaison d'une station d'accueil 6 (qui sera décrite dans la suite en référence à la figure 5), lesdits moyens de liaison étant connectés à une (ou plusieurs) source(s) de gaz de pressurisation,
- une (ou plusieurs) borne(s) de connexion de contrôle 22 débouchant vers l'extérieur de la cassette 2, et destinée(s) à être raccordée(s) aux moyens de liaison de la station d'accueil 6,
- un compartiment de stockage 24 formant logement pour un fluide de conservation (qui peut être contenu dans un récipient de type poche médicale),
- un réservoir de récupération 25 destiné à collecter les fluides usagers issus des chambres de conservation 1,
- un système de commutation 26 incluant un (ou plusieurs) clapet(s) déformable(s) pour contrôler le débit de circulation du fluide de conservation à l'intérieur des chambres de conservation 1, la mise en pression des chambres de conservation, la circulation du fluide de conservation, etc.
- des canaux de circulation (de fluide de conservation ou de gaz) 23 s'étendant à l'intérieur de la cassette 2 entre :
   ∘ la (ou les) borne(s) de connexion d'entrée 21 et le compartiment de stockage 24,
   ∘ le compartiment de stockage 24 et les chambres de conservation 1,
   ∘ la ou les borne(s) de connexion de contrôle 22 et le système de commutation 26, et entre
   ∘ les chambres de conservation 1 et le réservoir de récupération 25
- ces canaux 23 sont avantageusement gravés dans le corps même de la cassette afin de s'affranchir des problèmes liés au câblage classique (tels que les raccords, les joints, les longueurs de tubulures, la porosité des tubulures en particulier au gaz, etc.).

Avantageusement, chaque cassette peut comprendre une étiquette de radio-identification - connue sous le nom d'étiquette RFID (sigle de l'expression anglo-saxonne *« Radio Frequency IDentification »*) pour assurer une traçabilité du prélèvement cornéen au cours de sa conservation.

Chaque cassette peut en outre comprendre un ballonnet de gonflage, l'actionnement manuel du ballonnet de gonflage permettant d'augmenter la pression dans le compartiment de stockage 24 puis dans les chambres de conservation lorsque la cassette 2 est déconnectée de la station d'accueil 6.

### 1.3. Station d'accueil

Le fait que le dispositif intègre les chambres de conservation 1 et ses périphériques sous forme d'une cassette 2 permet d'en faciliter la manutention et le stockage, par exemple dans une station d'accueil permettant de maintenir les chambres de conservation à une température désirée, à une pression contrôlable et dans une atmosphère contrôlée (pourcentages en N₂, O₂, CO₂ en particulier). Cette intégration permet en outre d'améliorer la stérilité de l'intérieur du dispositif médical, notamment grâce à la séparation des circuits de gaz et de fluide(s) de conservation ainsi que la connexion par des bornes (dépourvues de tubulure).

A titre indicatif, un exemple de station d'accueil est illustré à la figure 5. La station d'accueil 6 contient des moyens de régulation en température pour maintenir son volume intérieur à une température de consigne.

Cette station d'accueil 6 est par exemple une étuve de conservation du commerce. Le volume intérieur de la station d'accueil 6 comprend une structure support incluant des casiers 7 destinés à recevoir chacun une cassette 2 respective.

Chaque casier 7 comporte des moyens de liaison destinés à être connectés aux bornes d'entrée et de contrôle 21, 22 de sa cassette 2 associée pour permettre l'alimentation en gaz de celle-ci. L'insertion de la cassette dans le casier 7 permet de relier les moyens de liaison aux bornes d'entrée. Chaque casier 7 peut également comporter des moyens de contrôles de présence de cassette et/ou des moyens de lecture/écriture d'étiquette RFID.

La station d'accueil 6 contient également un dispositif d'injection 43 tel qu'une pompe à membrane ou tout autre système permettant de produire de l'air ou un gaz comprimé destiné à alimenter chaque cassette 2.

La station d'accueil inclut un moyen de contrôle de régulation de pression, ainsi qu'un moyen de commande séquentiel par commutation pneumatique du système de commutation 26. Ces moyens de contrôle et de commande sont communs à l'ensemble des cassettes 2. Ils sont attribués de façon séquentielle à chacune des cassettes 2, via les moyens de liaison contenus dans chacun des casiers dans lesquelles les cassettes sont enfichées. Ceci afin de mutualiser avantageusement la régulation de pression et le débit de liquide de conservation au sein de chacune des cassettes 2 présentes dans la station d'accueil 6.

La station d'accueil 6 peut être connectée (par une liaison avec ou sans fil) à une unité de commande distante telle qu'un ordinateur personnel, ou une tablette tactile, ou tout autre unité de commande connue de l'homme du métier.

Lorsqu'elle est insérée dans la station d'accueil 6, la cassette 2 est en mode conservation longue durée, avec une pression et un dédit de fluide de conservation régulé. Lorsque la cassette 2 est retirée de la station d'accueil 6, le débit de liquide est stoppé, et le système de commutation 26 intégré permet avantageusement un maintien en pression du fluide de conservation dans ses circuits internes en toute autonomie. Cette faculté couplée à une réduction de poids et de volume conséquent, confère à la cassette une extrême mobilité, autorisant avantageusement des déplacements d'un point à un autre.

Différents éléments du dispositif médical selon l'invention vont maintenant être décrits plus en détails.

### 2. Chambres de conservation

### 2.1. Moyens de blocage du tissu cornéen

Le dispositif comprend des moyens de blocage 14 en position du tissu cornéen 3 de sorte que la face épithéliale du tissu cornéen 3 s'étende en regard du couvercle 13.

Dans les modes de réalisation illustrés aux figures 9 et 10, les moyens de blocage définissent, avec le tissu cornéen 3, les chambres de conservation dites respectivement *« chambre endothéliale »* 4 et *« chambre épithéliale »* 5.

Plus précisément, les moyens de blocage comprennent :
- une embase 141 sur laquelle le fond 11 est fixé, et destinée à recevoir le tissu cornéen 3,
- un anneau de maintien souple 142 permettant de maintenir le tissu cornéen 3 en position sur l'embase 141.

La chambre endothéliale 4 et la chambre épithéliale 5 peuvent comprendre chacune au moins trois orifices :
- un orifice d'entrée pour l'injection de fluide de conservation,
- un orifice de sortie pour l'évacuation du fluide de conservation, et
- un orifice technique pour le prélèvement d'échantillon de fluide (par exemple pour son analyse) ou l'injection de substances complémentaires dans la chambre.

Les orifices d'entrée et de sortie des deux chambres 4, 5 permettent de faire circuler un fluide de conservation et de le renouveler pour optimiser la conservation du tissu cornéen.

Avantageusement, la composition du fluide de conservation injecté dans la chambre épithéliale 5 peut être différente de la composition du fluide de conservation injecté dans la chambre endothéliale 4.

### 2.1.1. Embase

L'embase 141 constitue le socle de la cassette. Elle comprend une ouverture centrale dont le bord supérieur 143 (opposé au fond 11) est destiné à recevoir le tissu cornéen. Le diamètre de l'ouverture centrale est de préférence sensiblement égal au diamètre d'une cornée (typiquement entre 9 et 13 millimètres de diamètre).

La surface du bord supérieur 143 de l'embase 141 (i.e. opposé au fond 11) peut être incurvée pour se conformer à la courbure du tissu cornéen 3. Notamment, la surface du bord supérieur 143 peut présenter une forme tronconique, voir une forme torique.

Le tissu cornéen 3 est destiné à être disposé sur l'embase 141 de sorte que la collerette de sclère périphérique du tissu cornéen 3 vienne en contact avec le bord supérieur 143.

L'embase 141 comprend également (au moins) un orifice d'entrée et (au moins) un orifice de sortie. Les orifices d'entrée et de sortie permettent la circulation du fluide de conservation 41 dans la chambre endothéliale 4 dont les parois sont définies par :
- le fond 11 du dispositif,
- l'embase 141,
- l'anneau de maintien 142, et
- le tissu cornéen 3.

### 2.1.2. Anneau de maintien

L'anneau de maintien 142 s'étend perpendiculairement vers l'intérieur de la paroi latérale 12.

Le trou de l'anneau de maintien 142 peut être elliptique ou circulaire. Dans le cas d'un trou circulaire, le diamètre intérieur de l'anneau de maintien 142 est de préférence sensiblement égal au diamètre d'une cornée (typiquement entre 9 et 13 millimètres de diamètre) et sensiblement identique à l'ouverture centrale de l'embase. Ainsi la sclère du tissu cornéen 3 est destinée à venir en contact avec le bord intérieur 144 de l'anneau de maintien 142.

L'anneau de maintien est avantageusement réalisé dans un matériau souple de sorte à s'incurver par déformation élastique pour se conformer au profil du bord supérieur 143. Ceci permet en outre à l'anneau de maintien 142 d'absorber les irrégularités éventuelles de la collerette de sclère en s'écrasant plus ou moins afin de garantir un appui de force calibrée et d'assurer l'étanchéité dans la zone de contact entre le prélèvement cornéen 3 et l'anneau de maintien 142.

L'anneau de maintien 142 peut être fixé à la paroi latérale 12 ou être monté de manière amovible sur ladite paroi latérale 12. Par exemple dans le mode de réalisation illustré aux figures 9 et 10, la face interne de la paroi latérale 12 comprend une bordure annulaire 121 s'étendant vers l'intérieur. Cette bordure annulaire 121 est destinée à plaquer l'anneau de maintien 142 contre l'embase 141 lorsque la paroi latérale 12 est assemblée sur le fond 11 du dispositif.

Bien entendu, la bordure annulaire 121 peut être remplacée par une pluralité de tétons disposés sur la face interne de la paroi latérale 12 et s'étendant radialement vers l'intérieur de celle-ci.

### 2.1.3. Principe de fonctionnement

Le principe de fonctionnement des moyens de blocage 14 est le suivant.

Le tissu cornéen 3 est déposé sur l'embase 141 de sorte que la face endothéliale du tissu cornéen 3 s'étende en regard du fond 11. La collerette de sclère périphérique du tissu cornéen 3 vient en contact avec le bord supérieur 143 de l'embase 141.

L'anneau de maintien 142 est déposé sur le tissu cornéen 3 Le bord intérieur 144 vient en contact avec la collerette de sclère périphérique du tissu cornéen 3.

La paroi latérale 12 du dispositif est assemblée sur le fond 11. Plus précisément, la paroi latérale 12 est déplacée en translation entre les moyens de clipsage 111. Les pattes élastiques à retour de forme s'écartent de leur position initiale lors du passage du rebord périphérique 122 au niveau des becs d'accrochage.

En se rapprochant du fond 11, la bordure annulaire 121 de la paroi latérale 12 tend à plaquer l'anneau de maintien 142 contre l'embase 141. Le déplacement en translation de la paroi latérale 12 induit un déplacement en translation de l'anneau de maintien 142 vers l'embase 141 de sorte à bloquer le tissu cornéen 3 en position.

Le fait que le mouvement de l'anneau de maintien soit rectiligne (i.e. translation de l'anneau de maintien 142 vers l'embase 141) plutôt qu'hélicoïdale (par exemple en cas de vissage de l'anneau de maintien) permet de limiter les risques de torsion du tissu cornéen 3 lors du blocage de celui-ci en position. Ceci permet d'améliorer la viabilité du tissu cornéen ainsi conservé. En effet, une torsion du tissu cornéen induit l'apparition de plis dans le tissu cornéen, ces plis provoquant une dégradation accélérée des cellules et du tissu cornéen 3.

Lorsque la bordure atteint une position dans laquelle le rebord périphérique 122 s'étend sous les becs d'accrochage, les pattes élastiques reviennent dans leurs positions initiales respectives de sorte que les becs d'accrochage plaquent la paroi latérale contre le fond 11 en appliquant une force d'appui sur le rebord périphérique 122.

La collerette de sclère est comprimée entre le bord supérieur 143 de l'embase 141 et le bord intérieur 144 de l'anneau de maintien 142 afin de maintenir le tissu cornéen 3 en position dans les chambres de conservation. L'utilisation de moyens de clipsage pour l'assemblage de la paroi latérale 12 contre le fond 11 permet de garantir l'application d'une force de compression constante de la collerette de sclère d'un dispositif médical à l'autre.

Ceci rend l'opération de mise en place d'un tissu cornéen dans le dispositif répétable et facilement réalisable par un opérateur peu expérimenté à l'utilisation du dispositif.

Le lecteur aura compris que le principe de fonctionnement ci-dessus a été présenté en référence à un dispositif médical dans lequel l'anneau de maintien 142 n'est pas fixé à la paroi latérale 12. Il est bien évident pour l'homme du métier que les étapes de mise en place de l'anneau de maintien 142 et de la paroi latéral 12 sont réalisées simultanément dans le cas d'un dispositif médical dans lequel l'anneau de maintien 142 est fixé à la paroi latérale 12.

### 2.2.Alimentation en fluide de conservation

Une fois le tissu cornéen installé et la circulation de fluide de conservation mise en service, le tissu cornéen peut être conservé plusieurs semaines avant son utilisation pour une greffe de cornée ou une expérimentation ex-vivo.

Pour augmenter la durée de cette conservation du prélèvement cornéen, un fluide de conservation est utilisé.

La gestion de l'alimentation du dispositif en fluide de conservation est assurée par l'ensemble d'éléments suivant :
- Au niveau de la cassette 2 :
   ∘ les borne(s) de connexion d'entrée 21 et de contrôle 22 destinées à être raccordée(s) à une (ou plusieurs) source(s) de gaz de pressurisation,
   ∘ le compartiment de stockage 24 formant logement pour un fluide de conservation : le fluide de conservation peut être contenu directement dans le compartiment 24 ou être contenu dans un récipient (par exemple de type poche médicale) disposé dans le compartiment 24,
   ∘ le réservoir de récupération 25 destiné à collecter les fluides usagers issus des chambres de conservation 1,
   ∘ le système de commutation 26 destiné à contrôler la circulation du fluide de conservation,
   ∘ les canaux de circulation 23 s'étendant à l'intérieur de la cassette 2,
- Au niveau de la station d'accueil 6 :
   ∘ les moyens de liaison destinés à être connectés aux bornes d'entrée et de contrôle,
   ∘ un dispositif d'injection 43 utilisant un gaz comprimé pour distribuer le fluide 41 et commander le système de commutation 26.

Cet ensemble d'éléments permet la circulation et le renouvellement du fluide de conservation dans la chambre endothéliale 4 et/ou dans la chambre épithéliale 5. Cet ensemble d'éléments permet en outre de faire varier la pression à l'intérieur des chambres endothéliale et épithéliale 4, 5 de manière à avoir continuellement une surpression dans la chambre endothéliale 4. Cette surpression peut correspondre à la pression rencontrée par la cornée de façon physiologique du côté endothélial, ou correspondre à toute autre pression choisie par l'utilisateur.

Avantageusement, si le compartiment 24 de la cassette 2 comprend deux fluides de conservation distincts (par exemple contenus dans des compartiments distincts du compartiment 24 ou dans des récipients de type poche médicale logés dans le compartiment 24) associés chacun à une chambre respective, alors la composition du fluide de conservation circulant dans la chambre endothéliale 4 peut être différente de la composition du fluide de conservation circulant dans la chambre épithéliale 5 (par exemple un mélange liquide de conservation + gaz de composition contrôlée N₂ O₂ CO₂). Ceci permet de disposer d'un milieu de conservation adapté à chaque type cellulaire (endothéliale et épithéliale).

Le dispositif d'injection 43 permet l'injection de gaz sous pression dans le compartiment de stockage 24 et dans le système de commutation 26. Le dispositif d'injection 43 peut être contenu dans la station d'accueil 6 et être connecté à la cassette 2 par l'intermédiaire des bornes de connexion 21, 22 de la cassette 2. Le dispositif d'injection 43 est par exemple un compresseur de gaz, ou cartouche de gaz comprimé, ou une connexion à un réseau d'air comprimé, permettant de générer 2 pressions distinctes : une pression régulée destinée à la pressurisation de la chambre endothéliale par l'intermédiaire d'un organe de commutation 432 (tel qu'une vanne), et une pression de service destinée à commander les organes de commutations de fluide 26 via les liaisons 22.

L'utilisation d'un dispositif d'injection 43 de gaz sous pression (en lieu et place de la pompe à galet décrite dans WO 2014/140434) dissocié de la cassette 2 présente de nombreux avantages.

Notamment il permet :
- de réduire l'encombrement et le poids de la cassette 2 intégrant les chambres de conservation,
- d'augmenter la durée de vie de la cassette 2 (en s'affranchissant du problème d'usure des tuyaux lié à l'utilisation d'une pompe péristaltique),
- de réduire la chaleur générée par la pompe (le moteur d'une pompe péristaltique dégageant plus de calories qu'un dispositif d'injection à gaz comprimé),
- de réduire les *« à-coups »* dans la régulation du débit de fluide de conservation et de la pression,
- de réguler de façon plus précise la pression et le débit dans la (ou les) chambre(s),
- d'améliorer le rendement énergétique de pressurisation-circulation,
- de faciliter la réalisation d'un circuit fluidique indépendant dans la chambre épithéliale, afin de l'exposer à un fluide de conservation différent de la chambre endothéliale,
- de faciliter l'exposition intermittente du prélèvement cornéen 3 à un flux de gaz (tel que de l'air ou à une atmosphère contrôlée par enrichissement d'oxygène et/ou de dioxyde de carbone) pour améliorer la qualité du tissu cornéen et/ou faciliter son imagerie (possibilité de remplir la chambre épithéliale de gaz (air par exemple) ce qui autorise l'utilisation d'instruments de mesure optique du greffon (pachymétrie ou détection d'aberrations optiques dues à une chirurgie réfractive du donneur, à titre d'exemple par tomographie par cohérence optique, ou microscopie spéculaire),
- de limiter les risques de contamination par le milieu extérieur,
- de faciliter le transport du dispositif (du site de prélèvement jusqu'à la banque de cornée puis de la banque jusqu'au bloc opératoire) en intégrant tous les éléments nécessaires à la conservation du tissu cornéen dans celui-ci.

Le gaz sous pression permet de propulser le fluide de conservation 41 dans les chambres de conservation.

### 2.2.1. Alimentation en fluide de type « avec contact »

En référence à la figure 6, on a illustré un mode de réalisation dans lequel le fluide de conservation 41 est stocké directement dans le compartiment de stockage 24 pour une alimentation en fluide de type *« avec contact ».*

Dans ce cas le gaz comprimé issu du dispositif d'injection est introduit directement dans le compartiment 24 pour propulser le fluide de conservation 41 vers la chambre endothéliale 4 (le gaz et le fluide se mélangent dans cette configuration). L'avantage de cette solution est de permettre des échanges entre le gaz et le fluide de conservation (par exemple enrichissement en oxygène et/ou en dioxyde de carbone).

Dans le mode de réalisation illustré à la figure 6, la cassette 2 comprend un organe de commutation 432 et un filtre 433 entre les bornes d'entrée 21 et de contrôle 22 d'une part, et le compartiment de stockage 24 d'autre part.

Dans ce mode de réalisation, le principe de fonctionnement est le suivant. Le dispositif d'injection 43 fournit :
- un gaz comprimé propulseur régulé en pression par l'intermédiaire de la borne d'entrée 21, ce gaz propulseur étant destiné à être injecté dans le compartiment de stockage 24, et
- un gaz comprimé de contrôle par l'intermédiaire des bornes de contrôle 22, ce gaz de contrôle permettant de piloter l'ouverture et la fermeture de l'organe de commutation 432,

L'organe de commutation 432 commande l'injection du gaz propulseur vers le compartiment de stockage 24. Plus précisément, un gaz comprimé de contrôle (formant commande pneumatique) est appliqué sur la borne de contrôle 22a pour autoriser le gaz propulseur sous pression injecté via la borne d'entrée 21 à se propager vers le compartiment de stockage 24.

Le filtre 433 stérilise le gaz propulseur comprimé issu du dispositif d'injection 43 préalablement à son introduction dans le compartiment 24. Le gaz propulseur injecté dans le compartiment de stockage pousse le fluide de conservation 41 vers la chambre endothéliale 4. Le milieu initialement contenu dans la chambre endothéliale 4 (par exemple l'air lors de la fermeture du dispositif), est chassé vers la chambre épithéliale 5.

### 2.2.2. Alimentation en fluide de type sans contact

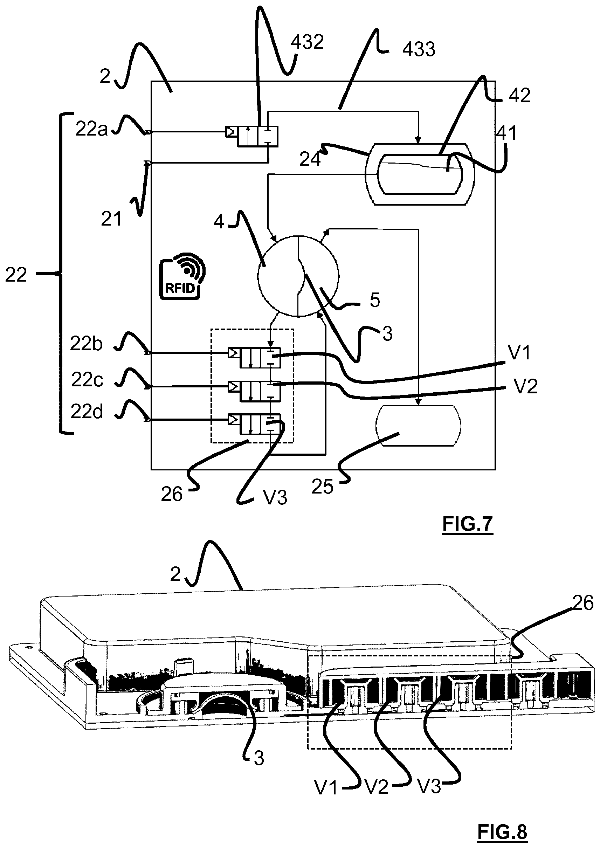

En référence à la figure 7, on a illustré un mode de réalisation dans lequel le fluide de conservation 41 est contenu dans un récipient 42 logé dans le compartiment de stockage 24 pour une alimentation en fluide de type *« sans contact ».* Le récipient 42 peut consister en une poche médicale comportant deux feuilles flexibles ou souples superposées et soudées à leur périphérie.

Un ballon gonflable destiné à recevoir le gaz propulseur est également logé dans le compartiment de stockage 24. Ce ballon gonflable permet d'exercer une pression sur les faces extérieures des parois du récipient 42 lors de sa dilatation pour propulser du fluide de conservation 41 vers la chambre endothéliale 4 (le gaz et le fluide ne se mélangent pas dans cette configuration).

Dans le mode de réalisation illustré à la figure 7, la cassette 2 comprend un organe de commutation 432 entre les bornes 21,22 et le compartiment de stockage 24.

Dans ce mode de réalisation, le principe de fonctionnement est le suivant. Le dispositif d'injection 43 fournit les gaz comprimés (propulseur et de contrôle) aux bornes d'entrée et de contrôle 22.

L'organe de commutation 432 - asservi par le capteur de pression - commande l'injection du gaz propulseur dans le compartiment de stockage 24. Plus précisément, un gaz comprimé de contrôle (formant commande pneumatique) est appliqué sur la borne de contrôle 22a pour autoriser le gaz propulseur sous pression injecté via la borne d'entrée 21 à se propager vers le compartiment de stockage 24.

Le gaz propulseur comprimé est introduit dans le ballon gonflable qui tend à appuyer sur les parois du récipient 42 lors de sa dilatation.

Cette pression exercée par le ballon gonflable sur le récipient 42induit l'éjection du fluide de conservation 41 vers la chambre endothéliale 4.

### 2.2.3. Système de commutation

Le dispositif d'injection 43 fournit également un gaz comprimé de contrôle au système de commutation 26 par l'intermédiaire des bornes de contrôle 22b, 22c, 22d. Ce gaz de contrôle permet de piloter le système de commutation 26.

En référence à la figure 8, on a illustré un exemple de système de commutation 26 permettant de contrôler le débit et la pression du fluide de conservation à l'intérieur des chambres endothéliale 4 et épithéliale 5.

Le système de commutation 26 comprend des vannes V1, V2, V3 pilotées par pression pneumatique (grâce au gaz de contrôle injecté dans les bornes de contrôle 22b, 22c, 22d).

Ces vannes V1, V2, V3 peuvent consister en des clapets en élastomères déformables sous l'effet d'une pression pneumatique. Ces vannes V1, V2, V3 présentent la particularité d'être fermées en l'absence d'une pression de pilotage. Ceci permet avantageusement à la cassette 2 de rester sous pression lorsqu'elle est retirée de son casier 7.

Les vannes V1, V2, V3 sont actionnés selon une séquence animée en cinq étapes.

Dans une première étape (dite initiale), les trois vannes V1, V2, V3 sont fermées au repos et aucun liquide ne peut circuler à travers le système de commutation 26.

Dans une deuxième étape, le dispositif d'injection 43 émet un gaz de contrôle dans les bornes de contrôle 22b, 22C. Les première et deuxième vannes V1, V2 s'ouvrent sous l'action du gaz de contrôle. Ceci permet au fluide de conservation de s'introduire dans la deuxième vanne V2, via la première vanne V1.

Dans une troisième étape, le dispositif d'injection 43 stoppe l'émission de gaz de contrôle dans la borne de contrôle 22b. La première vanne V1 se referme emprisonnant ainsi une quantité de fluide de conservation dans le volume mort de la deuxième vanne V2.

Dans une quatrième étape, le dispositif d'injection 43 émet un gaz de contrôle dans la borne de contrôle 22d. La troisième vanne V3 s'ouvre pour libérer le fluide contenu dans la deuxième vanne V2.

Dans une cinquième étape, le dispositif d'injection 43 stoppe l'émission de gaz de contrôle dans la borne de contrôle 22c. La deuxième vanne V2 se referme en expulsant le fluide contenu dans son volume mort vers la troisième vanne V3.

Le retour à l'étape initiale se traduit par la fermeture de la troisième vanne V3 qui expulse à son tour le fluide contenu dans son volume mort en direction de la chambre épithéliale 5.

Un cycle complet déplace un volume de fluide équivalant au volume mort d'une vanne, et en particulier au volume mort de la deuxième vanne V2. C'est donc le volume mort de la deuxième vanne V2, et la fréquence de répétition de la séquence qui va déterminer le débit de fluide dans la cassette 2.

### 2.3. Couvercle

Comme décrit précédemment, le dispositif comprend un couvercle apte à venir s'engager dans la paroi latérale 12 de manière étanche pour délimiter la chambre épithéliale.

Différents types de couvercles peuvent être utilisés, et notamment un couvercle d'applanation 13 ou un couvercle de trépanation 15. Plus précisément, si le couvercle d'applanation est monté sur la paroi latérale, celui-ci peut être remplacé par un couvercle de trépanation, par exemple pour réaliser une découpe du tissu cornéen (et inversement). C'est pourquoi le dispositif médical peut inclure une pluralité de couvercles différents pouvant être installés sur la paroi latérale 12 en fonction des besoins du praticien. Selon l'invention, le dispositif médical inclut au moins le couvercle d'applanation.

Différents types de couvercles vont maintenant être décrits plus en détails.

### 2.3.1. Couvercle d'applanation

En référence aux figures 9 à 12, un exemple de couvercle d'applanation 13 selon l'invention est illustré. Le couvercle d'applanation 13 permet d'aplatir le tissu cornéen 3 pour son imagerie ou son traitement en vase clos (i.e. sans exposer le tissu cornéen 3 au milieu extérieur) de sorte à éviter tout risque de contamination.

Le couvercle d'applanation 13 comprend une fenêtre 131 déplaçable en translation, et un support 132 pour relier la fenêtre 131 à la paroi latérale 12 du dispositif.

### 2.3.1.1. Fenêtre

La fenêtre 131 est constituée dans un matériau transparent aux rayonnements (lumineux et électromagnétiques) ou aux ultrasons.

Ceci permet à un utilisateur d'observer (par exemple en utilisant un microscope en réflexion spéculaire ou un appareil d'OCT ou un appareil d'échographie) et/ou de traiter (par exemple en utilisant un L.A.S.E.R.) le tissu cornéen 3 depuis l'extérieur du dispositif et ceci sans l'ouvrir (procédé communément dit « en vase clos »).

La fenêtre 131 peut être plane ou courbe. Elle comprend un bourrelet annulaire à sa périphérie. Le bourrelet annulaire est destiné à coopérer avec une rainure annulaire du support 132 pour fixer la fenêtre 131 de manière étanche sur le support 132.

### 2.3.1.2. Support

Le support 132 est fixé de manière amovible sur la paroi latérale 12 du dispositif.

Le support 132 permet de maintenir la fenêtre 131 au droit du tissu cornéen 3. Avantageusement, le support 132 comporte des moyens de déplacement en translation de la fenêtre 131 par rapport à la paroi latérale 12 du dispositif.

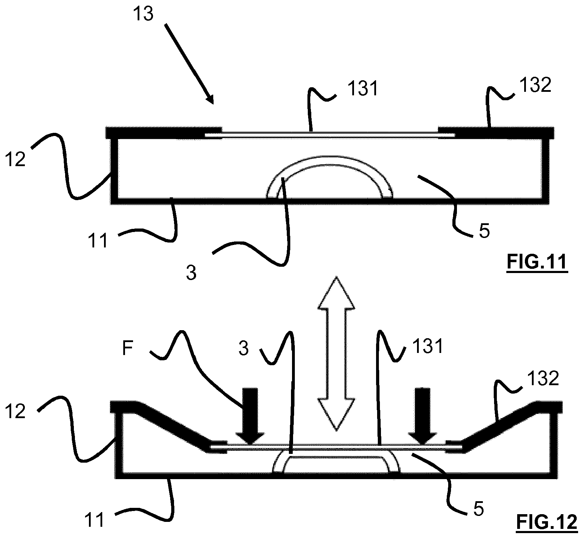

Plus précisément, le support 132 comporte des moyens permettant de déplacer la fenêtre 131 en translation entre :
- une position de repos dans laquelle la fenêtre 131 est distante du tissu cornéen 3 (cf. figures 9 et 11),
- une position active dans laquelle la fenêtre 131 est en contact avec le tissu cornéen 3 pour l'aplatir (cf. figures 10 et 12).

Pour passer de la position de repos à la position active, l'utilisateur applique (avec un microscope ou un L.A.S.E.R. ou tout autre élément) une force en direction du tissu cornéen 3, perpendiculairement au plan contenant la fenêtre 131 pour déplacer la fenêtre 131 vers le fond 11 du dispositif.

Le fait que la fenêtre 131 soit mobile en translation (plutôt qu'en rotation comme proposé dans WO 2014/140434) permet de limiter les risques de torsion du tissu cornéen 3 lorsque la fenêtre 131 vient en contact avec celui-ci pour l'aplatir, cette torsion pouvant détériorer le tissu cornéen 3 comme précisé précédemment.

Avantageusement, le support 132 est réalisé dans un matériau souple élastiquement déformable. Ceci permet garantir l'étanchéité du couvercle 13 et ainsi d'améliorer la stérilité du dispositif.

Le support 132 peut comprendre une zone de dégagement pour recevoir une partie du gaz et/ou du fluide de conservation contenu dans la chambre épithéliale 5 lorsque la fenêtre 131 est dans la position active. Ceci permet de limiter les variations de pression dans les chambres endothéliale et épithéliale 4, 5 lors du passage de la fenêtre 131 de la position de repos à la position active.

Dans le mode de réalisation illustré aux figures 9 à 12, le support 132 est composé d'un manchon externe et les moyens de déplacement en translation consistent en un soufflet annulaire, le manchon et le soufflet étant réalisés d'un seul tenant.

Le manchon est destiné à être emmanché en force sur la face interne de la paroi latérale 12 (ou en variante clipsé sur une gorge externe de la paroi latérale 12 grâce à des moyens d'ancrage - tels que des crochets de fixation - montés sur l'anneau externe).

Le soufflet annulaire s'étend radialement vers l'intérieur du manchon externe. Le bord libre du soufflet comprend la rainure annulaire destinée à coopérer avec le bourrelet annulaire de la fenêtre 131 pour fixer ensemble le support 132 et la fenêtre 131. Bien entendu, un adhésif - tel que de la colle biocompatible - ou tout autre moyen connu de l'homme du métier peut être utilisé pour garantir une fixation étanche de la fenêtre 131 sur le support 132.

Le soufflet annulaire peut comprendre un (ou plusieurs) pli(s) (successifs). Le (ou les) pli(s) (de forme générale arrondie concave) permet(tent) la compression et l'extension du soufflet ainsi qu'une flexion de part et d'autre de sa position de repos.

De préférence le soufflet annulaire est à retour de forme, de sorte que lorsqu'aucune force n'est appliquée sur la fenêtre 131, celle-ci revient en position de repos. Ainsi, dès la fin de la manipulation d'imagerie ou de traitement du tissu cornéen 3, la fenêtre 131 revient automatiquement en position de repos sans que l'utilisateur n'ait à effectuer d'action. Ceci permet d'éviter qu'un tissu cornéen 3 soit stocké plusieurs semaines en étant aplati ce qui le détériorerait partiellement.

### 2.3.1.3. Principe de fonctionnement

Le principe de fonctionnement du couvercle d'applanation 13 est le suivant.

Lorsque l'utilisateur souhaite imager le tissu cornéen 3, par exemple pour contrôler la qualité cellulaire et tissulaire de celui-ci, il positionne une tête de microscope en regard de la fenêtre 131, et la déplace vers le fond 11 du dispositif.

Ceci induit le déplacement en translation de la fenêtre 131 vers le fond 11 du dispositif : le (ou les) pli(s) du soufflet s'étend(ent).

Le déplacement de la fenêtre 131 vers le tissu cornéen induit une diminution du volume de la chambre épithéliale. Le (ou les) pli(s) du soufflet (qui constitue(nt) la zone de dégagement) se déforme(nt) afin de recevoir une partie du gaz ou du fluide contenu dans la chambre épithéliale 5. Ceci limite les variations de pression dans la chambre épithéliale 5.

La fenêtre 131 vient en contact avec le tissu cornéen 3. La mise en appui de la fenêtre 131 contre le tissu cornéen 3 tend à aplanir celui-ci. Le déplacement de la fenêtre 131 se poursuit jusqu'à ce que l'utilisateur cesse de déplacer le microscope vers le fond 11 et/ou que la fenêtre vienne en butée contre le bord intérieur 144 de l'anneau de maintien 14.

Ainsi, le couvercle d'applanation 13 permet d'obtenir une déformation contrôlée du tissu cornéen 3 par contact de la fenêtre 131 du couvercle avec la face épithéliale du tissu cornéen 3, tout en gardant le dispositif étanche (vase clos excluant tout risque de contamination).

Ce couvercle d'applanation 13 permet :
- d'amortir les éventuelles variations de pression (par déformation du (ou des) pli(s) du soufflet)
- d'améliorer la qualité de l'imagerie
   ∘ le contact optique de l'appareil d'imagerie avec la fenêtre et le tissu cornéen supprime les interfaces avec le fluide de conservation ou l'air dans la chambre épithéliale, ce qui améliore l'imagerie obtenue par exemple par microscopie spéculaire, OCT, biométrie ultrasonore, microscopie confocale ou tout autre technique connue de l'homme du métier,
   ∘ en aplanant le tissu cornéen, il est possible de définir une surface de référence (plane ou courbe), et d'améliorer les possibilités d'imagerie (champ plus large, suppression de la courbure naturelle de la cornée),
- de réaliser en vase clos une découpe au LASER de la cornée, qu'elle soit parallèle à la surface plane (greffes lamellaires antérieures de forme circulaire ou libre (patch cornéen) ou greffes endothéliales) et/ou perpendiculaires à la surface (greffes transfixiantes ou lamellaires),
- de réduire le risque de traumatisme du tissu cornéen (pas de manipulation du greffon), et de garantir sa stérilité grâce au maintien en vase clos,

### 2.3.2. Couvercle de trépanation

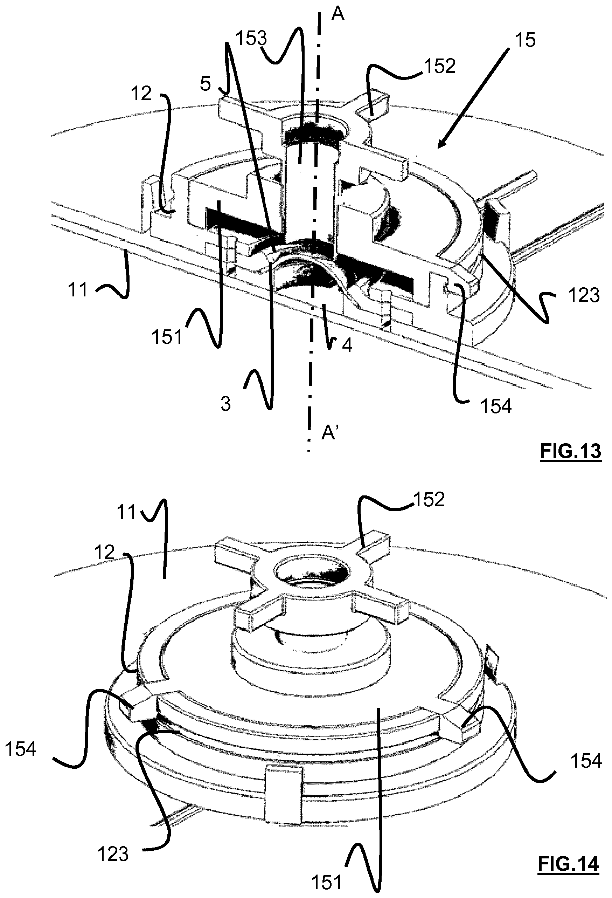

En référence aux figures 13 et 14, on a illustré un deuxième type de couvercle du dispositif, à savoir un couvercle de trépanation 15.

Le couvercle de trépanation 15 permet de pratiquer une incision circulaire dans le tissu cornéen 3. Plus précisément, le couvercle de trépanation permet de réaliser une découpe transfixiante ou non (profondeur contrôlée) du tissu cornéen en vue de greffes transfixiantes ou lamellaires.

Le couvercle de trépanation 15 comprend :
- une enveloppe extérieure 151 présentant un axe A-A', et possédant une partie de pied pour son application sur la paroi latérale du dispositif,
- un porte-lame intérieur 152 mobile dans l'enveloppe 151, et coaxial audit support 151,
- une lame cylindrique 153 également coaxial à l'enveloppe 151.

L'enveloppe extérieure 151 présente la forme générale d'un disque. Elle comprend des crochets de fixation 154 s'étendant radialement vers l'extérieur à sa périphérie. Chaque crochet de fixation 154 est destiné à coopérer avec une nervure annulaire 123 ménagée sur la face externe de la paroi latérale 12 pour permettre la fixation du couvercle de trépanation 15 sur la paroi latérale 12. La partie centrale de l'enveloppe extérieure 151 comprend un passage traversant incluant un pas de vis dont le pas connu permet de quantifier précisément la pénétration de la lame.

Le porte-lame 152 est destiné à être positionné dans le passage traversant de l'enveloppe extérieure 151. Il comprend :
- une extrémité distale incluant des moyens de préhension pour permettre à un utilisateur de manipuler le porte-lame 152, et
- une extrémité proximale portant la lame cylindrique 153.

La face externe du porte-lame 152 comporte, entre ses extrémités proximale et distale, un pas de vis complémentaire du pas de vis de l'enveloppe extérieure 151.
Le principe de fonctionnement du couvercle de trépanation 15 est le suivant. Une fois le couvercle de trépanation 15 fixé sur la paroi latérale 12 du dispositif, l'utilisateur visse le porte-lame 152 sur l'enveloppe extérieure 151 en utilisant les moyens de préhension. Ceci induit le déplacement de la lame cylindrique 153 (très lentement) vers le tissu cornéen 3 selon un mouvement hélicoïdal. La lame tranchante constituée par l'arête inférieure de la lame cylindrique 153 pénètre dans le tissu cornéen 3 et permet la réalisation d'une découpe circulaire par la face épithéliale en minimisant ainsi les lésions endothéliales et avec des bords verticaux.

Avantageusement, la pression peut être maintenue dans la chambre endothéliale 4 pendant toute l'opération de trépanation du tissu cornéen 3.

### Conclusions

L'invention décrite précédemment permet d'améliorer la mise en œuvre du bioréacteur selon WO 2014/140434, la qualité du tissu cornéen ainsi que de son imagerie, et d'étendre ses applications à de nouvelles fonctions, tels que la découpe cornéenne en vase clos au laser, la trépanation cornéenne etc.
a. Le dispositif décrit précédemment permet d'augmenter la durée de conservation d'un tissu cornéen. Par ailleurs, il permet d'améliorer la qualité du tissu cornéen conservé.
   Notamment l'agencement des moyens de blocage, et en particulier le déplacement en translation de l'anneau de maintien 142 par rapport à l'embase 141 permet d'éviter la torsion du tissu cornéen 3 et donc l'apparition de plis dans celui-ci.
   Par ailleurs, la présence de moyens de clipsage 111 pour l'assemblage de la paroi latérale 12 sur le fond 11 permet de garantir l'application d'une force de compression constante sur le tissu cornéen. Ceci rend l'opération de mise en place de tissus cornéens répétable d'un dispositif médical à l'autre.
b. Le dispositif décrit précédemment permet également d'améliorer la qualité d'imagerie du tissu cornéen 3.
   Notamment, le fait que le couvercle d'applanation 13 comprenne des moyens de déplacement en translation de la fenêtre 131 permet de limiter les risques de vrillage du tissu cornéen 3 lors de son aplatissement, ce vrillage pouvant dégrader la qualité d'imagerie du tissu cornéen 3.
c. Enfin, le dispositif décrit précédemment permet de faciliter la manipulation du tissu cornéen 3, notamment en ce qui concerne son extraction du dispositif et/ou sa découpe, par exemple lors d'une intervention chirurgicale de greffe de cornée.

En référence à l'extraction du tissu cornéen 3, la présence d'une zone de faiblesse sur les pattes élastiques permet de les rendre sécables sous l'action d'une force d'intensité supérieure à un seuil de rupture de la zone de faiblesse. Ceci facilite le désassemblage de la paroi latérale 12 afin de libérer le tissu cornéen 3 lors d'une procédure chirurgicale de greffe. µ

En référence à la découpe du tissu cornéen 3, le fait qu'un couvercle de trépanation 15 soit adaptable sur le dispositif (grâce aux crochets de fixation et à la nervure annulaire) permettra à l'utilisateur de réaliser une trépanation par voie épithéliale qui présente de nombreux avantages par rapport à une trépanation par punch (découpe par compression verticale rapide type emporte-pièce qui réalise des bords non verticaux et endommage les cellules endothéliales en bord de découpe) par voie endothéliale. Le système de régulation de la pression endothéliale du dispositif reste totalement fonctionnel et permet à la cornée de conserver sa pressurisation (donc sa forme physiologique) pendant la trépanation. Ce couvercle de trépanation épithéliale permet :
- de réaliser une découpe parfaitement verticale, totale ou partielle
- de minimiser les lésions endothéliales en cas de découpe transfixiante.

Le lecteur aura compris que de nombreuses modifications peuvent être apportées au dispositif médical décrit précédemment sans sortir matériellement des nouveaux enseignements et des avantages décrits ici. L'invention est exposée dans le jeu de revendications joint.

## Revendications

1. Dispositif médical pour la conservation d'un tissu cornéen (3) préalablement prélevé, le dispositif comprenant un fond (11) au moins partiellement transparent, au moins une paroi latérale (12), des moyens de réception et de blocage du tissu cornéen (3), et un couvercle d'applanation (13) pour coiffer une ouverture opposée au fond (11), le couvercle d'applanation (13) incluant fenêtre transparente (131),
***caractérisé en ce que*** le couvercle d'applanation (13) inclut en outre un support (132) entre la fenêtre (131) et la paroi latérale (12), le support (132) comportant des moyens de déplacement en translation de la fenêtre (131) par rapport à la paroi latérale (12) du dispositif.

2. Dispositif selon la revendication 1, ***dans lequel*** le support (132) est constitué dans un matériau souple élastiquement déformable.

3. Dispositif selon l'une quelconque des revendications 1 ou 2, ***lequel*** est configuré de telle sorte que, en usage, les moyens de réception et de blocage (14) définissent avec le fond (11), le tissu cornéen (3), la paroi latérale (12) et le couvercle (13), un chambre endothéliale (4) et une chambre épithéliale (5), les chambres endothéliale et épithéliale incluant des orifices d'entrée et de sortie pour la circulation d'un gaz et/ou d'un fluide de conservation, le support (132) comprenant une zone de dégagement pour recevoir une partie du gaz et/ou du fluide de conservation contenu dans la chambre épithéliale (5) lorsque la fenêtre (131) est déplacée en translation vers le fond (11).

4. Dispositif selon l'une quelconque des revendications 1 à 3, ***dans lequel*** les moyens de déplacement en translation comprennent un soufflet annulaire ayant au moins un pli.

5. Dispositif selon la revendication 4, ***dans lequel*** le soufflet annulaire est constitué dans un matériau à retour de forme.

6. Dispositif selon l'une quelconque des revendications 1 à 5, ***dans lequel*** la paroi latérale (12) comprend une nervure annulaire (123).

7. Dispositif selon l'une quelconque des revendications 1 à 6, ***lequel*** comprend en outre un couvercle de trépanation incluant une enveloppe extérieure circulaire (151), un porte-lame (152), et une lame cylindrique (153), le couvercle d'applanation pouvant être remplacé par le couvercle de trépanation pour coiffer une ouverture opposée au fond (11), par exemple pour réaliser une découpe du tissu cornéen.

8. Dispositif selon les revendications 6 et 7 prises en combinaison, ***dans lequel*** l'enveloppe extérieure (151) du couvercle de trépanation comporte aux moins deux crochets de fixation (154) à sa périphérie, les crochets de fixation (154) s'étendant radialement et étant destiné à coopérer avec la nervure (123) ménagée dans la face externe de la paroi latérale (12).

9. Dispositif selon l'une quelconque des revendications 1 à 8, ***dans lequel*** la paroi latérale (12) comprend un rebord périphérique (122) et le fond (11) comprend des moyens de clipsage (111), lesdits moyens de clipsage consistant en au moins deux pattes élastiques destinées à coopérer avec le rebord périphérique (122).

10. Dispositif selon la revendication 9, ***dans lequel*** les moyens de clipsage (111) comprennent au moins trois pattes élastiques régulièrement réparties autour de la paroi latérale (12).

## Patentansprüche

1. Medizinische Vorrichtung zur Konservierung eines zuvor entnommenen Hornhautgewebes (3), wobei die Vorrichtung einen mindestens teilweise durchsichtigen Boden (11), mindestens eine Seitenwand (12), Aufnahme- und Arretierungsmittel des Hornhautgewebes (3) und eine Applanationsabdeckung (13) zum Abdecken einer Öffnung gegenüber dem Boden (11) umfasst, wobei die Applanationsabdeckung (13) ein transparentes Fenster (131) einschließt,
**dadurch gekennzeichnet, dass** die Applanationsabdeckung (13) ferner einen Träger (132) zwischen dem Fenster (131) und der Seitenwand (12) einschließt, wobei der Träger (132) Translationsverlagerungsmittel des Fensters (131) im Verhältnis zur Seitenwand (12) der Vorrichtung aufweist.

2. Vorrichtung nach Anspruch 1, wobei der Träger (132) aus einem flexiblen elastisch verformbaren Material besteht.

3. Vorrichtung nach einem der Ansprüche 1 oder 2, die derart ausgelegt ist, dass im Gebrauch die Aufnahme- und Arretierungsmittel (14) mit dem Boden (11), dem Hornhautgewebe (3), der Seitenwand (12) und der Abdeckung (13) eine Endothelkammer (4) und eine Epithelkammer (5) definieren, wobei die Endothel- und Epithelkammer Einlass- und Auslassöffnungen für die Zirkulation eines Gases und/oder eines Fluids zur Konservierung einschließt, wobei der Träger (132) eine Freigabezone umfasst, um einen Teil des in der Epithelkammer (5) enthaltenen Gases und/oder Fluids zur Konservierung aufzunehmen, wenn das Fenster (131) translatorisch zum Boden (11) verlagert ist.

4. Vorrichtung nach einem der Ansprüche 1 bis 3, wobei die Translationsverlagerungsmittel einen ringförmigen Balg mit mindestens einer Falte umfassen.

5. Vorrichtung nach Anspruch 4, wobei der ringförmige Balg aus einem Material besteht, das in seine Form zurückkehrt.

6. Vorrichtung nach einem der Ansprüche 1 bis 5, wobei die Seitenwand (12) eine ringförmige Rille (123) umfasst.

7. Vorrichtung nach einem der Ansprüche 1 bis 6, die ferner eine Trepanationsabdeckung umfasst, die eine kreisförmige äußere Hülle (151), einen Plättchenhalter (152) und ein zylindrisches Plättchen (153) einschließt, wobei die Applanationsabdeckung durch die Trepanationsabdeckung ersetzbar ist, um eine Öffnung gegenüber dem Boden (11) abzudecken, beispielsweise um das Hornhautgewebe zu schneiden.

8. Vorrichtung nach den Ansprüchen 6 und 7, herangezogen in Kombination, wobei die äußere Hülle (151) der Trepanationsabdeckung mindestens zwei Befestigungshaken (154) an ihren Umfang aufweist, wobei sich die Befestigungshaken (154) radial erstrecken und bestimmt sind, mit der in der äußeren Fläche der Seitenwand (12) eingerichteten Rille (123) zusammenzuwirken.

9. Vorrichtung nach einem der Ansprüche 1 bis 8, wobei die Seitenwand (12) einen Umfangsrand (122) umfasst und der Boden (11) Rastmittel (111) umfasst, wobei die Rastmittel aus mindestens zwei elastischen Füßen bestehen, die zum Zusammenwirken mit dem Umfangsrand (122) bestimmt sind.

10. Vorrichtung nach Anspruch 9, wobei die Rastmittel (111) mindestens drei elastische, um die Seitenwand (12) gleichmäßig verteilte Füße umfassen.

## Claims

1. A medical device for preserving previously removed corneal tissue (3), the device comprising an at least partially transparent base (11), at least one side wall (12), means for receiving and locking the corneal tissue (3), and an applanation lid (13) for covering an opening opposite the base (11), the applanation lid (13) including a transparent window (131),
**characterized in that** the applanation lid (13) further includes a support (132) between the window (131) and the side wall (12), the support (132) having means for translating the window (131) relative to the side wall (12) of the device.

2. The device as claimed in claim 1, wherein the support (132) is made of an elastically deformable soft material.

3. The device as claimed in any one of claims 1 or 2, which is configured such that, in use, the means for receiving and locking (14) define with the base (11), the corneal tissue (3), the side wall (12) and the lid (13), an endothelial chamber (4) and an epithelial chamber (5), the endothelial and epithelial chambers including inlet and outlet orifices for the circulation of a gas and/or a preserving fluid, the support (132) comprising a clearance zone for receiving part of the gas and/or the preserving fluid contained in the epithelial chamber (5) when the window (131) is translated towards the base (11).

4. The device as claimed in any one of claims 1 to 3, wherein the means for translating comprise an annular bellows having at least one pleat.

5. The device as claimed in claim 4, wherein the annular bellows is made of a shape-reversing material.

6. The device as claimed in any one of claims 1 to 5, wherein the side wall (12) comprises an annular rib (123).

7. The device as claimed in any one of claims 1 to 6, which further comprises a trepanation lid including a circular outer casing (151), a blade holder (152), and a cylindrical blade (153), the applanation lid being replaceable with the trepanation lid to cover an opening opposite the base (11), for example to perform a cutting of corneal tissue.

8. The device as claimed in claims 6 and 7 taken in combination, wherein the outer casing (151) of the trepanation lid has at least two fastening hooks (154) at its periphery, the fastening hooks (154) extending radially and being intended to cooperate with the rib (123) provided in the outer face of the side wall (12).

9. The device as claimed in any one of claims 1 to 8, wherein the side wall (12) comprises a peripheral flange (122) and the base (11) comprises clipping means (111), said clipping means consisting of at least two elastic tabs intended to cooperate with the peripheral flange (122).

10. The device as claimed in claim 9, wherein the clipping means (111) comprise at least three elastic tabs uniformly distributed around the side wall (12).
